# EUROPEAN PATENT APPLICATION

(11) **EP 4 032 754 A1**
(43) Date of publication of application: **27.07.2022**
(21) Application number: 21152785.8
(22) Date of filing: 21.01.2021
(51) Int. Cl.: B60R 16/037, B60N 2/00, H04M 1/72463

(54) **A SYSTEM FOR USER POSITION DETECTION**

(71) Applicant: Syddansk Universitet, 5230 Odense M (DK)
(72) Inventor: Teichmann, Daniel, 5260 Odense S (DK)
(74) Representative: Plougmann Vingtoft a/s

(57) **Abstract**

The present invention concerns a system for detecting the position of a user (20, 30) of an electronic device in a vehicle, comprising an electronic system (10) for performing user specific functions (100) comprising an interface; at least one location electrode, (24, 34) wherein said electrode (24, 34) is positioned at least on the passenger side (99) of said vehicle, said electrode having an electrical characteristic for identifying the electrode (24, 34); and a detection device for measuring the electrical characteristic between the electrode (24, 34) and the interface and thereby determining at which location the current user (20, 30) of the electronic system (10) is.

## Description

### FIELD OF THE INVENTION

The present invention relates to a system for detecting the position of a user of an electronic device in a vehicle.

### BACKGROUND OF THE INVENTION

US 2009/0292423 A1 discloses a vehicle occupant presence and position sensing system. The system comprises sensors in the form of capacitor electrodes in the back of the seat and the bottom of the seat. The sensors measure impedance between them and the measurements are used in a decision making unit to determine if the seat is occupied or not, and if occupied what type of occupant is in the seat. This may be used for seat belt warning and control of inflation of air bags.

WO 2014/110342 A1 also discloses an occupant classification system with a seat back sensor and a seat bottom sensor. The sensors work by measuring impedance to the ground, and the different values of measurement correspond to different types of occupants. Hence the measurements are compared to an occupant classification system. This system is relatively simple and used for seat belt reminder systems.

Vehicles, in particular automotive vehicles, are fitted with more and more electronic systems, including control systems, switches, dials and the like. The operating of such systems can distract the driver while driving and passengers can interfere with the vehicle control if the passenger is using the devices for controlling the vehicle. To avoid unwanted operation of the electronic systems it would be useful to provide measures to prevent such unwanted operation of electronic devices in a vehicle while driving. However, no satisfactory solutions appear to meet this wanted function in a vehicle.

The above-mentioned known systems are designed to produce seat belt reminders to the driver and the passenger or passengers of a vehicle and complex functions as classify the occupant in a specific seat and in response control the inflation of the associated air bag. However, these systems are complicated and found unnecessarily complicated in relation to the desired function of distinguishing whether the driver or the passenger is using a specific button or touchscreen on the control panel of the vehicle, in particular the electronic systems, such as the navigation system or entertainment system or other control systems of the vehicle.

### OBJECT OF THE INVENTION

On this background, it is an objective of the invention in relation to the automotive scenario to distinguish whether the driver or on of the passengers is using a specific button or touchscreen.

### SUMMARY OF THE INVENTION

This objective is achieved by a system for detecting the position of a user of an electronic device in a vehicle, comprising
- an electronic system for performing user specific functions comprising an interface and/or any type of input device;
   at least one location electrode, wherein said electrode is positioned at least on the passenger side of said vehicle, said electrode having an electrical characteristic for identifying the electrode; and
- a detection device for measuring the electrical characteristic between the electrode and the interface and thereby determining at which location the current user of the electronic system is.

The invention enables the determination of where the current user of an interface (e.g. touchscreen or buttons) is located. In its most simple embodiment with a vehicle having two seats, a single electrode in the passenger side seat of a vehicle is enough to determine who is using the interface. As the vehicle is driven, there must be someone in the driver's seat, so if the electronic system is receiving input but the detection device does not detect the electrode, it must be the driver who is providing the inputs. If the electrode instead is detected together with an input, it must be an input coming from the passenger. In this manner, it is according to the invention simple and efficient to detect who is using the electronic system while the vehicle is driving or the like.

In a preferred embodiment of the invention, several location electrodes are placed on spots where the user potentially could be located and the impedance measurement is performed between such location electrodes and the interface. When a person is touching the interface while being located on a location electrode, the impedance between the interface and said location electrode will change and be significantly different from the impedance(s) between the interface and the other location electrode(s). If no contact is established, the impedance between the interface and the location electrodes is infinitively high, but when a contact is made between the user sitting on a particular location electrode and is touching the interface, the impedance is of a measurable lower value as a circuit is established through the particular electrode and then it is determined where the user is sitting.

Thus, by the invention there is provided a simple system for location of the user in a multi-user environment for instance in an automotive environment. The system is advantageous, in particular when used in for detecting the location of the user in a multi-user environment in a car or the like, by the simple detection of which seat the user touch on the interface comes from.

However, alternatively, it is realized by the invention that the electrical characteristic may be an identification signal unique to the electrode, such as a sine wave of a predetermined frequency. Accordingly, in the embodiments using a plurality of electrodes, i.e. at least two electrodes, the detection device may advantageously be adapted to measuring identification signals unique to each or all of location electrodes, such as sine waves of predetermined frequencies.

Such identification signals could be in its simplest version sine waves of different frequencies, but the identification signals could also be other types of unique signals. When the user touches the interface this signal would be transmitted via the user to the interface and be detected there. Since each location electrode has its unique identification signal it can easily be determined where the user is located. The electrode may be any kind of electrical signal generator and such signal generator may be provided in the seat of the vehicle and/or on the user, such as a wearable device or the like.

In a preferred embodiment, the at least two location electrodes are positioned one in each seat of the vehicle, preferably at least the two front seats. More preferably, the at least two location electrodes are positioned in the driver side seat and the passenger side seat, respectively, of the vehicle. In a car environment, this allows the system to determine if it is the driver performing the touch on the interface or if it is the passenger side where the user is sitting.

When identifying the position of the actual user of the electronic system, the interface may adapt the functions available depending on the location of the user. Particularly, the interface may - in response to the detection of the location of the user - block, modify and/or provide one or more user specific functions of the electronic system.

In accordance with the invention, the interface may be a touch screen or one or more buttons and/or dials for receiving inputs from the user to the electronic system. The electronic system may include a navigation system, a car entertainment system and/or the like. Buttons, dials and/or entire sub-systems may be blocked or specifically allowed depending on the identification of the position of the user in the vehicle.

Preferably, the location electrodes are made of electrically conductive material and in particular the location electrodes may be made of metal plates or foils. The location electrodes hereby ensure to produce a significantly lower impedance once a user touching one of the electrodes makes contact with the interface and thereby complete an electric circuit.

The location electrodes are preferably covered by further nonconductive, dielectric material, such as textiles of seat covers. Hereby the electrodes can easily be provided in a car seat, in the seat bottom and/or in the seat back. This way, the impedance change would be mainly capacitive.

### BRIEF DESCRIPTION OF THE FIGURES

In the following, the invention is described in more detail with reference to the accompanying drawings, in which:
Figure 1 is a schematic illustration of the system for user detection according to a first embodiment of the invention;
Figure 2 is a diagram of the system according to the first embodiment of the invention;
Figure 3 is a schematic illustration of the system for user detection according to a second embodiment of the invention;
Figure 4 is a diagram of the system according to the second embodiment of the invention; and
Figure 5 is a diagram of a system according to a third embodiment of the invention.

### DETAILED DESCRIPTION OF AN EMBODIMENT

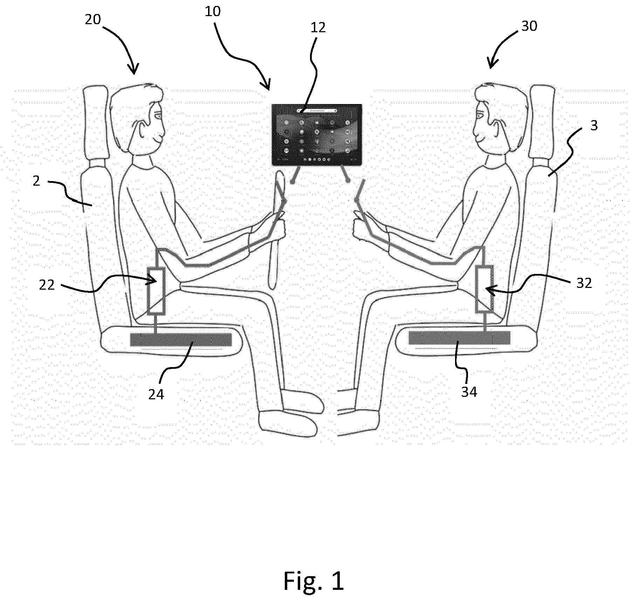

With reference to figure 1, in accordance to the invention, the system is provided with an electronic system 10 having a touch screen 12 as user interface in a multi-user environment. The users 20, 30 are seated in a first seat 2 and a second seat 3. In each of the seats 2, 3 a first location electrode 24 and a second location electrode 34, respectively, are provided.

The system is provided such that when one of the users 20, 30 is touching the interface 12 while being located on one of the location electrodes 24, 34, the impedance between the interface 12 and the location electrode 24, 34 will be significantly different (lower) to the impedance between the interface 12 and the other location electrode 24, 34. The total impedance of each of the seats when occupied also depends on the impedance of each of the users, as indicated in fig. 1 by references 22, 32.

However, the exact value of the impedance is immaterial according to the present invention. If no contact is established, the impedance between the interface 12 and the location electrodes 24, 34 is infinitively high, but when a contact is made between the user sitting on a particular location electrode is established by the user touching the interface 12, the impedance is of a measurable lower value as an electric circuit is established though the particular electrode and then it is determined where the user is sitting.

By the invention this simple measurement of the electric impedance is sufficient to determine which of the potential users is actually using the electronic device 10 by operating the interface 12 thereof.

In figure 1, an example of the system according to an embodiment of the invention is shown. Two location electrodes 24 and 34 are positioned in each their seat of the vehicle as shown in fig. 1, preferably at least the two front seats of an automotive vehicle. In particular, the two location electrodes 24, 34 are positioned in the driver side seat and the passenger side seat, respectively, of the vehicle. These positions are readily detectable by measuring the location electrodes 24, 34 in the seats. Accordingly, in a car environment, this allows the system to determine if it is the driver performing the touch on the interface of if it is in the passage side the user is sitting.

In the shown embodiment, the location electrodes 24, 34 are made of electrically conductive material and in particular the location electrodes may be made of metal plates or foils. The electrodes may also be an integral structural part of the seats, depending on the actual seat design. The main objective, in relation to the provision of the location electrodes, is to ensure significantly lower impedance once a user, who is touching one of the electrodes, and makes contact with the interface, thereby closes an electric circuit.

The location electrodes 24, 34 are preferably covered by further nonconductive, dielectric material, such as textiles of seat covers. Hereby the electrodes can easily be provided hidden in a car seat, such as in the seat bottom and/or in the seat back.

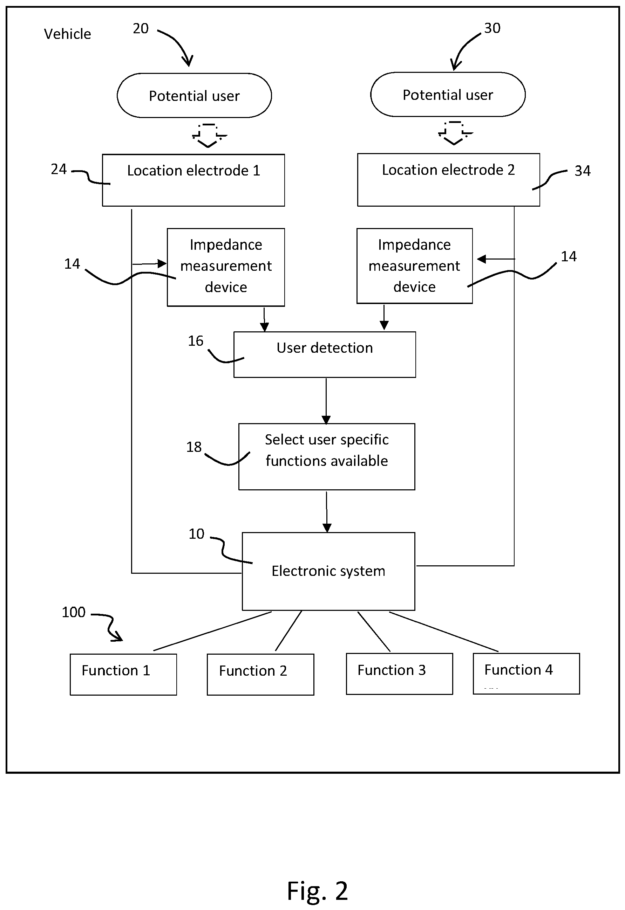

As shown in fig. 2, impedance measurement devices 14 are provided for measuring the impedance between each of the electrodes 24, 34 and the interface of the electronic system 10. The impedance measurements by said impedance measurement devices 14 are collected by a user detection function 16.

In accordance with the outcome of the user detection function, the position of the actual user of the electronic system is determined. In a function 18, the interface selects which user specific functions 100 are to be made available to the actual user. Thus the system, such as the interface 12 or another sub-system of the electronic system, may adapt the functions 100 available depending on the location of the user.

Accordingly, the system may - in response to the detection of the location of the user - block, modify and/or provide one or more user specific functions 100 of the electronic system 10. These functions may include a navigation system, a car entertainment system and/or the like. The electronic system may include buttons, dials and/or entire sub-systems which are blocked or specifically allowed depending on the identification of the position of the user in the vehicle.

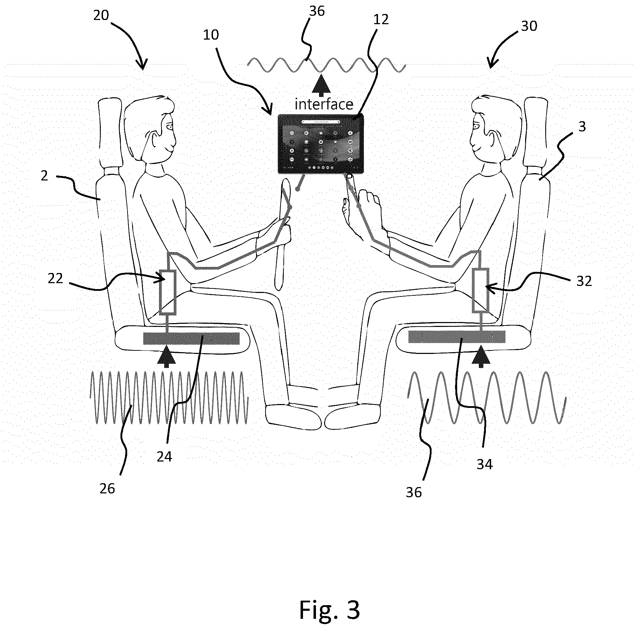

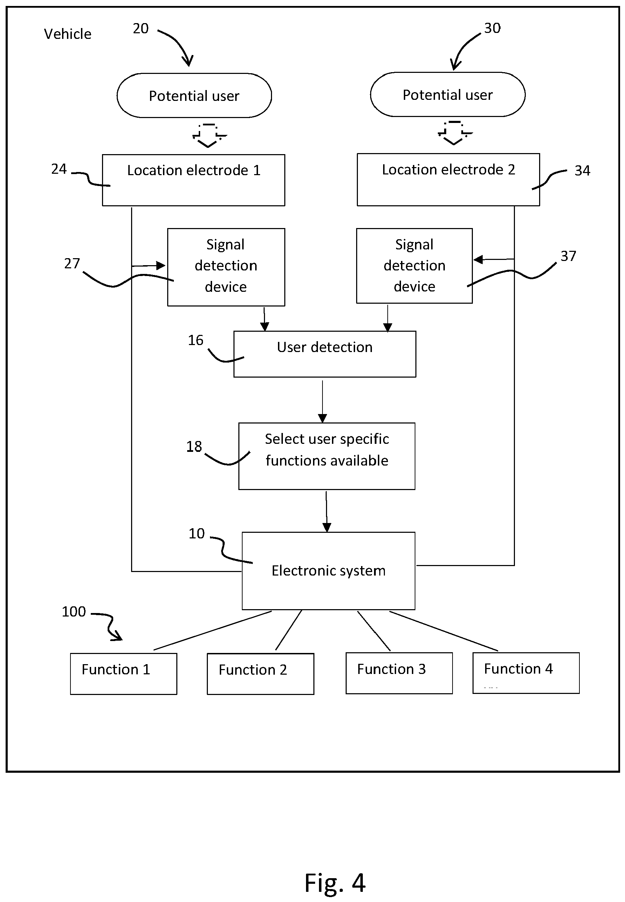

In figures 3 and 4, an alternative embodiment using two location electrodes 24, 34 is shown, where the electrical characteristic of the location electrodes is an identification signal 26, 36 unique to each of the electrodes, such as a sine wave of a predetermined frequency. The detection devices 16, 27, 37 are measuring identification signals 26, 36 unique to each or all of location electrodes 24, 34, such as sine waves of predetermined frequencies, and can thereby identify the user. The signals 26, 36 are sufficiently distinct so that the impedances 22, 32 of the persons potentially sitting in the seats do not confuse the signals 26, 36 from the location electrodes 24, 34.

Such identification signals 24, 34 could be in its simplest version sine waves of different frequencies, but the identification signals 24, 34 could also be other types of unique signals. When the user touches the interface, this signal would be transmitted via the user to the interface and be detected there. Since each location electrode 24, 34 has its unique identification signal 26, 36 it can easily be determined where the user is located, who is touching the interface 12 of the electronic system 10.

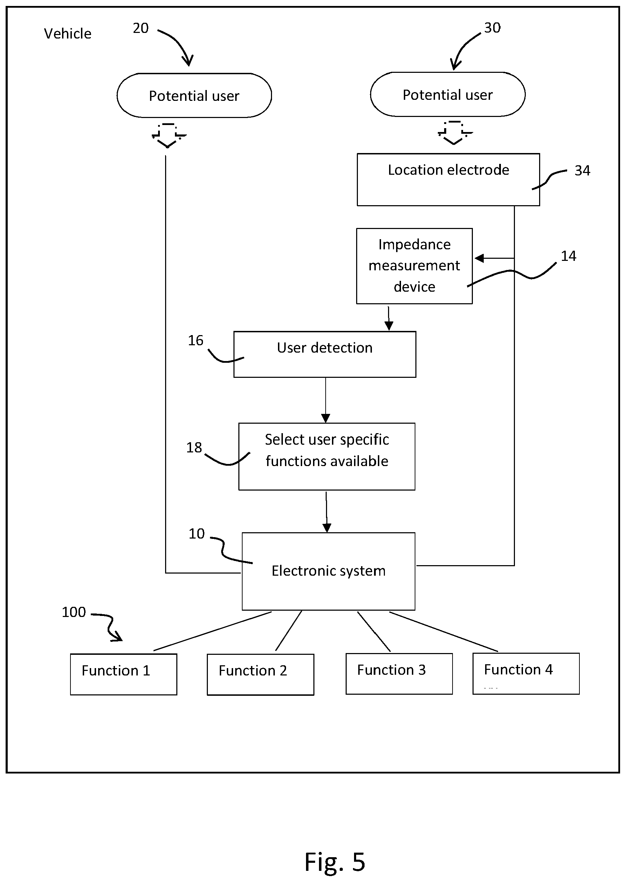

In figure 5, there is shown a schematic diagram of the most simple embodiment of the invention, where only one single electrode in the passage side seat of a vehicle is enough to determine who is using the interface. As the vehicle is driven, there must be someone in the driver's seat, so if the electronic system is receiving input but the detection device does not detect the electrode, it must be the driver who is providing the inputs. Contrary, if the electrode is detected the input must come from the passenger.

Although the present invention has been described with reference to the above-mentioned specified embodiments, it should not be construed as being in any way limited to the presented examples.

Above, the invention is described with reference to in-vehicle applications, such as automotive vehicles. However by the invention it is realized that the invention is useful for other applications in relation to other kinds of vehicles, such as sea-going vehicles or airplanes.

The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. Furthermore, individual features mentioned in different claims, may possibly be advantageously combined, and the mentioning of these features in different claims does not exclude that a combination of features is not possible and advantageous.

## Claims

1. A system for detecting the position of a user of an electronic device in a vehicle, comprising
- an electronic system for performing user specific functions comprising an interface;
- at least one location electrode, wherein said electrode is positioned at least on the passenger side of said vehicle, said electrode having an electrical characteristic for identifying the electrode; and
- a detection device for measuring the electrical characteristic between the electrode and the interface and thereby determining at which location the current user of the electronic system is.

2. A system according to claim 1, wherein the electrical characteristic of the at least one electrode is a predetermined electrical potential relative to said interface.

3. A system according to claim 2, wherein the detection device is measuring the impedance, such as the capacitance, between the interface and the at least one location electrode.

4. A system according to claim 1 or 2, wherein the electrical characteristic is an identification signal unique to the electrode, such as a sine wave of a predetermined frequency.

5. A system according to any one of claims 1 to 4, wherein at least two location electrodes are provided at potential user locations, said electrodes having different electrical characteristic for identifying the electrodes.

6. A system according to claim 5, wherein the at least two location electrodes are positioned in each their seat of the vehicle.

7. A system according to claim 5 or 6, wherein the at least two location electrodes are positioned in the driver side seat and the passenger side seat, respectively, of the vehicle.

8. A system according to any one of claims 5 to 7, wherein the detection device is measuring the capacitance between the interface and each or all of location electrodes.

9. A system according to any one of claims 5 to 7, wherein the detection device is measuring identification signals unique to each or all of location electrodes, such as sine waves of predetermined frequencies.

10. A system according to claim 9, wherein the location electrode and the electronics generating the identification signal are realized in a portable or wearable embodiment allowing user mobility.

11. A system according to any one of the preceding claims, wherein the interface may adapt the functions available depending on the location of the user.

12. A system according to any one of the preceding claims, wherein the interface may in response to the detection of the location of the user block, modify and/or provide one or more user specific functions of the electronic system.

13. A system according to any one of the preceding claims, wherein the interface may be a touch screen or one or more buttons and/or dials for receiving inputs from the user to the electronic system.

14. A system according to any one of the preceding claims, wherein the electronic system may include a navigation system, a car entertainment system and/or the like.

15. A system according to any one of the preceding claims, wherein the location electrodes are made of electrically conductive material, for instance the location electrodes are metal plates or foils.

16. A system according to any one of the preceding claims, wherein the location electrodes are covered by further nonconductive, dielectric material, such as textiles of seat covers.

17. A system according to any one of the preceding claims, wherein the electrode capable of providing an electrical signal is provided on the user, such as a wearable device or the like.
